# EUROPÄISCHE PATENTANMELDUNG

(11) **EP 2 674 637 A1**
(43) Veröffentlichungstag der Anmeldung: **18.12.2013**
(21) Anmeldenummer: 13168463.1
(22) Anmeldetag: 21.05.2013
(51) Int. Cl.: F16D 13/64

(54) **Trägerelement für einen Reibbelag**

(30) Priorität: 15.06.2012 DE 102012210070
(71) Anmelder: ZF Friedrichshafen AG, 88038 Friedrichshafen (DE)
(72) Erfinder: Diemer, Matthias, 97493 Bergrheinfeld (DE); Peterseim, Michael, 97493 Bergrheinfeld (DE)

(57) **Zusammenfassung**

Offenbart wird ein Trägerelement (22,24) für einen Reibbelag (12, 14), insbesondere für eine Reibungskupplung in einem Kraftfahrzeug, wobei das Trägerelement zumindest einseitig an einem Reibmaterial (16, 18) befestigbar ist, wobei das Trägerelement (22,24) zumindest abschnittsweise ein erstes inneres Ringteil (40) und ein zweites äußeres Ringteil (42) aufweist, die über mindestens ein, vorzugsweise stegartiges, Verbindungselement (44) miteinander verbindbar sind, sowie einen Reibbelag (12, 14) mit einem solchen Trägerelement (22,24), eine Belagfeder (4) für einen solchen Reibbelag, und eine Reibungskupplung mit einem derartigen Reibbelag (12, 14).

## Beschreibung

Vorliegende Erfindung betrifft ein Trägerelement für einen Reibbelag, insbesondere für eine Reibungskupplung in einem Kraftfahrzeug, wobei das Trägerelement zumindest einseitig an einem Reibmaterial befestigt ist, einen Reibbelag mit einem derartigen Trägerelement, eine Belagfeder zum Tragen eines solchen Reibbelags, sowie eine Reibungskupplung mit einem derartigen Reibbelag und/oder einer derartigen Belagfeder.

Bei Reibbelägen mit einem Trägerelement, das als Belagverstärkungsblech fungiert und dazu ausgelegt ist, das Reibmaterial zu tragen, werden das Trägerelement und das Reibbelagmaterial durch Pressen unter hohen Temperaturen miteinander verbunden. Derartige Beläge sind robust und können wegen der Möglichkeit, die Verbindungsniete zwischen Belag und Belagfeder direkt auf das Verstärkungsblech aufzusetzen, relativ dünn ausgeführt werden. Ein derartiger Reibbelag ist beispielsweise aus der DE 36 43 273 bekannt.

Nachteilig bei dem darin beschriebenen Reibbelag ist jedoch, dass sich der Belag während des Pressens verzieht, da der Pressvorgang mit einem Temperatureintrag auf Belag und Blech verbunden ist. Dieser Temperatureintrag kann wegen der unterschiedlichen Ausdehnungskoeffizienten und der Anisotropie von Trägermaterial und Reibmaterial zu einer Schirmung des Reibbelags führen. Um einer derartigen Schirmung vorzubeugen, ist beispielsweise in der DE 10 2007 048 946 vorgeschlagen worden, das Trägerelement so anzupassen, dass es einen Toleranzausgleich für die Ausdehnung des Belagmaterials bereitstellt.

Nachteilig an den derart ausgeformten Reibbelägen ist jedoch, dass auf die in dem Dokument beschriebene Art nur radial schmale Beläge und demzufolge auch nur Beläge mit kleinem Durchmesser gefertigt werden können.

Aufgabe vorliegender Erfindung ist es deshalb, ein Trägerelement für einen Reibbelag bereitzustellen, das einer Schirmung des Reibbelags entgegenwirkt und gleichzeitig die Herstellung eines Reibbelags mit großem Durchmesser erlaubt.

Diese Aufgabe wird gelöst durch ein Trägerelement gemäß Patentanspruch 1, einen Reibbelag gemäß Patentanspruch 17, einer Belagfeder gemäß Patentanspruch 19, sowie eine Kupplungseinrichtung gemäß Patentanspruch 22.

Vorliegende Erfindung basiert auf der Idee, ein Trägerelement für einen Reibbelag bereitzustellen, an dem zumindest einseitig ein Reibmaterial befestigbar ist, wobei das Trägerelement erfindungsgemäß zumindest abschnittsweise ein erstes inneres Ringteil und ein zweites äußeres Ringteil aufweist, die über mindestens ein, vorzugsweise stegartiges Verbindungselement miteinander verbindbar sind.

Aufgrund des inneren Ringteils und des äußeren Ringteils erhält das Trägerelement eine größere Stabilität, mit der es das Reibmaterial unterstützen kann.

Gemäß einem vorteilhaften Ausführungsbeispiel sind das erste und/oder das zweite Ringteil dazu ausgelegt, mit einer Öffnung versehen zu werden, durch die ein Befestigungselement, insbesondere ein Niet, zum Befestigen des Reibbelags an einer Trägerscheibe oder an einer Belagfeder führbar ist. Dadurch wird eine zweireihige Vernietung ermöglicht, die insbesondere zulässt, dass auch Reibbeläge mit einem großen Durchmesser sehr dünn ausgeführt sind.

Gemäß einem weiteren vorteilhaften Ausführungsbeispiel sind dabei das erste und das zweite Ringteil, vorzugsweise radial, relativ zueinander beweglich ausgebildet. Aufgrund der radialen Beweglichkeit wird den unterschiedlichen Ausdehnungskoeffizienten von Trägerelement und Reibmaterial Rechnung getragen, so dass einem Aufschirmen des Reibbelags entgegengewirkt werden kann.

Vorzugsweise sind das erste und/oder das zweite Ringteil als umfänglich geschlossener Ring ausgebildet, wodurch ein Trägerelement mit einer sehr hohen Stabilität bereitgestellt werden kann.

Bei einem weiteren bevorzugten Ausführungsbeispiel weist das erste und/oder das zweite Ringteil mindestens einen Schlitz auf. Diese Ausbildung ermöglicht insbesondere eine radiale Bewegung der Ringbereiche zueinander. Insbesondere ist dabei vorteilhaft, wenn der Innenring geschlossen ausgeführt ist, während der Außenring geschlitzt ausgebildet ist. Dadurch kann ein Reibbelag bereitgestellt werden, der eine sehr große Stabilität auch bei großen Durchmessern aufweist, während er gleichzeitig bei der Herstellung vor einem Aufschirmen bewahrt ist. Insbesondere trägt diese Ausgestaltung den im Vergleich zu dem Reibbelagaußenbereich höheren zu erwartenden Spannungen im Belaginnenbereich Rechnung.

Da regelmäßig die Öffnungen für das Befestigungselement erst in den Reibbelag gestanzt werden, nachdem Reibmaterial und Trägerelement miteinander verbunden wurden, kann die Gefahr bestehen, dass die auszubildenden Öffnungen genau auf die Schlitze treffen. Um diesem Problem zu begegnen, wird erfindungsgemäß vorgeschlagen, ein Trägerelement bereitzustellen, dessen Schlitze derart angeordnet sind, dass die auszubildende Öffnung auf eine ungeschlitzte Stelle in dem ersten und/oder zweiten Ringteil trifft. Dazu kann vorzugsweise die Anzahl der Schlitze ungleich der Anzahl der auszubildenden Öffnungen gewählt werden, wobei Öffnungen und Schlitze regelmäßig verteilt werden. Gemäß einem anderen Ausführungsbeispiel können auch die Schlitze und auszubildenden Öffnungen unregelmäßig verteilt werden, so dass auch in diesem Fall ein Zusammentreffen von Schlitzen auf auszubildenden Öffnungen verhindert werden kann.

Gemäß einem weiteren vorteilhaften Ausführungsbeispiel kann das mindestens eine, vorzugsweise stegartige Verbindungselement zwischen erstem und zweitem Ringteil im Wesentlichen radial ausgerichtet sein. Um jedoch eine hohe Stabilität und gleichzeitig einen geringeren Widerstand gegen die Verformung bei thermischer Belastung bereitzustellen, kann das Verbindungselement vorzugsweise auch eine im Wesentlichen tangentiale Ausrichtung aufweisen.

Dabei kann das mindestens eine Verbindungselement im Wesentlichen gerade ausgebildet sein und/oder im Wesentlichen eine Kurvenform aufweisen. Dabei ist ebenfalls möglich, dass die Verbindungselemente Mischformen aufweisen bzw. unterschiedlich ausgebildet sind.

Gemäß einem weiteren vorteilhaften Ausführungsbeispiel ist das mindestens eine Verbindungselement integral mit dem ersten und dem zweiten Ringteil verbunden. Dadurch kann ein Trägerelement mit einer hohen Festigkeit geschaffen werden.

Es kann jedoch auch vorteilhaft sein, das Verbindungselement integral mit dem ersten oder dem zweiten Ringteil zu verbinden und es drehfest aber lösbar an dem jeweils anderen Ringteil anzuordnen. Dadurch kann wiederum eine relative radiale Beweglichkeit zwischen den Ringteilen geschaffen werden, die einem Aufschirmen entgegenwirken kann.

Um die drehfeste aber lösbare Verbindung zwischen den Ringteilen und den Verbindungselementen bereitzustellen, kann vorteilhafterweise das mit den Verbindungselementen zu verbindende Ringteil eine Aussparung aufweisen, die derart ausgebildet ist, dass das mindestens eine Verbindungselement darin aufnehmbar ist, wobei vorzugsweise das mindestens eine Verbindungselement eine zu der Aussparung komplementäre Form aufweist. Dadurch kann das erste bzw. das zweite Ringteil über die Verbindungselemente drehfest an dem jeweils anderen Ringteil angeordnet werden.

Um eine eindeutige Lage zwischen den Ringteilen bereitzustellen, können dafür die Verbindungselemente bzw. die dazu angeordneten Aussparungen in zueinander unterschiedlichen Winkeln über das Trägerelement verteilt sein.

Gemäß einem weiteren vorteilhaften Ausführungsbeispiel weist das Trägerelement Montagezentrierelemente, insbesondere in Form von Zentrierlaschen auf, die vorzugsweise radial innen oder radial außen an dem ersten bzw. zweiten Ringteil ausgebildet sind. Diese Zentrierlaschen dienen dazu, beim Befestigen des Reibmaterials an dem Trägerelement das Reibmaterial und das Trägerelement zentriert aneinander anzupassen.

Des Weiteren können die Zentrierlaschen als Montagesicherung verwendet werden, so dass sichergestellt ist, dass auszubildenden Öffnungen und Schlitze nicht aufeinander treffen.

Gemäß einem weiteren Aspekt vorliegender Erfindung, wird erfindungsgemäß ein Reibbelag, insbesondere für eine Reibungskupplung in einem Kraftfahrzeug vorgeschlagen, bei dem ein Reibmaterial des Reibbelags zumindest einseitig an einem Trägerelement, wie oben beschriebenen, befestigt ist.

Vorteilhaft ist dabei ein Ausführungsbeispiel, bei dem das Trägerelement in das Reibmaterial eingebettet, so dass Trägerelement und Reibmaterial eine im Wesentlichen ebene Fläche bilden und/oder das Trägerelement im Wesentlichen von dem Reibmaterial umschlossen ist.

Weiterhin wird eine Belagfeder für einen derartigen Reibbelag beansprucht, der dazu ausgebildet ist, einen Reibbelag mit einer zweireihigen Vernietung an einer Nabenscheibe zu befestigen. Dabei weist die Belagfeder vorzugsweise einen ersten Abschnitt und einen zweiten Abschnitt auf, die dazu ausgelegt sind, mit dem ersten bzw. zweiten Ringteil vernietet zu werden. Vorzugsweise sind dabei die dazu verwendeten Nietöffnungen in der Belagfeder derart ausgebildet, dass die Belagfeder beidseitig mit einem Reibbelag ausstattbar ist. Dazu kann insbesondere vorgesehen sein, am ersten und am zweiten Abschnitt jeweils mindestens zwei Nietöffnungen vorzusehen, die vorzugsweise einen unterschiedlichen Durchmesser aufweisen, wobei die kleineren Öffnungen zur festen Verbindung mit den Nieten und die größeren Öffnungen zum Durchführen der Nieten mit einer begrenzten axialen Lose dienen. Besonders vorteilhaft ist dabei, die gleich ausgebildeten Nietöffnungen von erstem und zweitem Abschnitt über Kreuz anzuordnen.

Ein weiterer Aspekt vorliegender Erfindung betrifft eine Reibungskupplung, insbesondere für ein Kraftfahrzeug mit einer zwischen einem Schwungrad und einer Anpressplatte angeordneten Kupplungsscheibe, wobei die Kupplungsscheibe einen oben beschriebenen Reibbelag aufweist.

Weitere Vorteile und vorteilhafte Ausgestaltungen sind in den Unteransprüchen, der Beschreibung und den Zeichnungen definiert.

Im Folgenden soll die Erfindung anhand von Zeichnungen näher dargestellt werden. Dabei zeigen die Zeichnungen lediglich bevorzugte Ausführungsbeispiele und sollen nicht den Rahmen der Erfindung festlegen. Dieser wird allein durch die anhängigen Ansprüche bestimmt.

Es zeigen:
Figur 1: eine radiale Schnittansicht durch eine erfindungsgemäße Reibungskupplung;
Figur 2: eine vergrößerte Detailansicht der in Figur 1 dargestellten Reibungskupplung mit erfindungsgemäßer zweireihiger Vernietung;
Figur 3: eine schematische Darstellung einer erfindungsgemäßen Belagfeder für ein bevorzugtes erstes Ausführungsbeispiel der erfindungsgemäßen Reibungskupplung;
Figur 4: eine schematische Darstellung eines ersten Ausführungsbeispiels des erfindungsgemäßen Trägerelements;
Figur 5: eine schematische Darstellung eines zweiten Ausführungsbeispiels des erfindungsgemäßen Trägerelements;
Figur 6: eine schematische Darstellung eines dritten Ausführungsbeispiels des erfindungsgemäßen Trägerelements;
Figur 7: eine schematische Darstellung eines vierten Ausführungsbeispiels des erfindungsgemäßen Trägerelements;
Figur 8: eine schematische Darstellung eines fünften Ausführungsbeispiels des erfindungsgemäßen Trägerelements.

Im Folgenden werden gleiche oder gleichfunktionierende Elemente mit denselben Bezugszeichen bezeichnet.

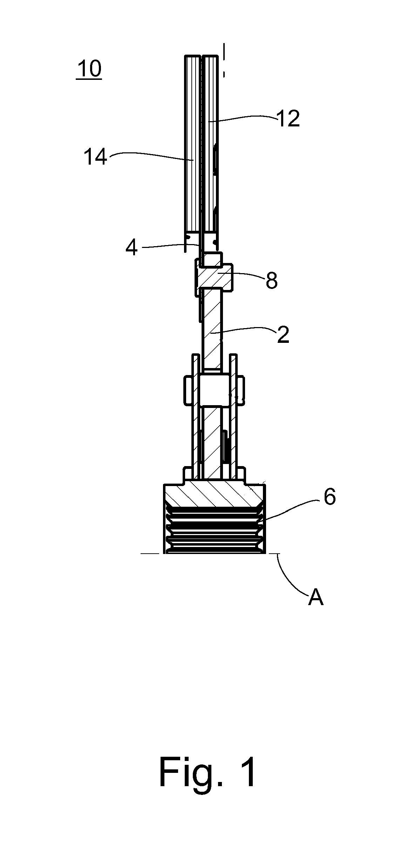

Figur 1 zeigt schematisch eine Reibungskupplung, insbesondere für ein Kraftfahrzeug, im Radialschnitt, die in bekannter Weise aufgebaut ist. Dabei wird eine Kupplungsscheibe 10 zwischen einem Schwungrad (nicht dargestellt) und einer Anpressplatte (nicht dargestellt) angeordnet, wobei durch Aufbringung einer axialen Andruckkraft die Anpressplatte einen Reibschluss zwischen sich, der Kupplungsscheibe und dem Schwungrad herstellt. Dabei drehen sich die Bauteile um eine Drehachse A und sind in einem Kupplungsgehäuse (nicht dargestellt) angeordnet.

Die Kupplungsscheibe 10 selbst weist eine Nabenscheibe 2 auf, an der radial außen umfänglich Belagfedern 4 mittels Nietverbindungen 8 fixiert sind. Die Nabenscheibe 2 ist drehfest mit einer Nabe 6 in bekannter Weise verbunden. Die Belagfedern 4 bilden einer Trägerscheibe und weisen radial außen Reibbeläge 12, 14 auf, deren Oberflächen jeweils die Anpressplatte bzw. das Schwungrad kontaktieren.

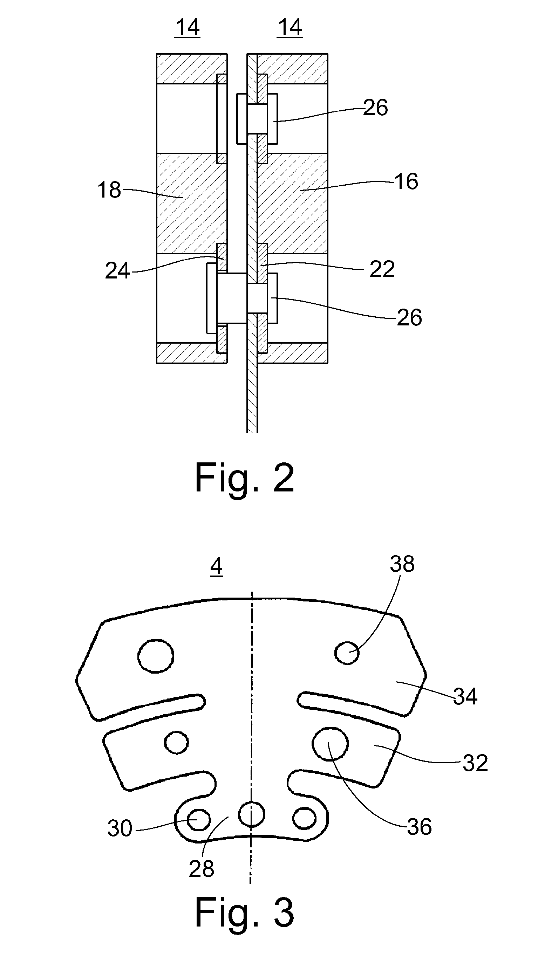

Wie in der vergrößerten Ansicht von Figur 2 dargestellt, weisen die Reibbeläge 12, 14 ein Reibmaterial 16, 18 auf, das mittels eines Trägerelements 22, 24 verstärkt ist. Die Verbindung zwischen Reibmaterial 16, 18 und Trägerelement 22, 24 erfolgt dabei über Nieten 26. Figur 2 zeigt zudem die erfindungsgemäße zweireihige Vernietung. Dabei wird die Belagfeder 4 radial innen und radial außen mit Nieten 26 an dem Trägerelement 22 bzw. 24 und dem Reibmaterial 16, 18 verbunden, wobei das Trägerelement 22 mit dem Reibmaterial 16 des Reibbelags 12 verbunden ist, während das Trägerelement 24 mit Reibmaterial 18 des Reibbelags 14 verbunden ist.

Wie in Figur 3 dargestellt, weist jede Belagfeder 4 radial innen eine Lasche 28 mit Befestigungsöffnungen 30 zum Verbinden mit der Nabenscheibe 2 auf. Des Weiteren zeigt Figur 3, dass die Belagfeder 4 erfindungsgemäß zumindest abschnittsweise einen ersten Abschnitt 32 und einen zweiten Abschnitt 34 aufweist, die jeweils Öffnungen 36, 38 zur Aufnahme der Nieten 26 aufweisen. Sind einige der Öffnungen dazu vorgesehen eine axial begrenzt bewegliche Verbindung mit den Nieten 26 herzustellen, insbesondere dann, wenn die Belagfeder 4 dazu ausgelegt ist zweilagig als so genannte Doppelbelagfeder eigesetzt zu werden, ist es vorteilhaft die Nietöffnungen 36, 38 mit unterschiedlichen Durchmessern auszugestalten, so dass jeweils eine große Öffnung eine axial begrente Bewegung der Niete zulässt. Vorzugsweise sind je Belagfeder gleiche Nietöffnungen 36, 38 über Kreuz angeordnet. Die Reibbeläge 12, 14 wiederum sind mit den erfindungsgemäßen Trägerelementen 22, 24 verstärkt.

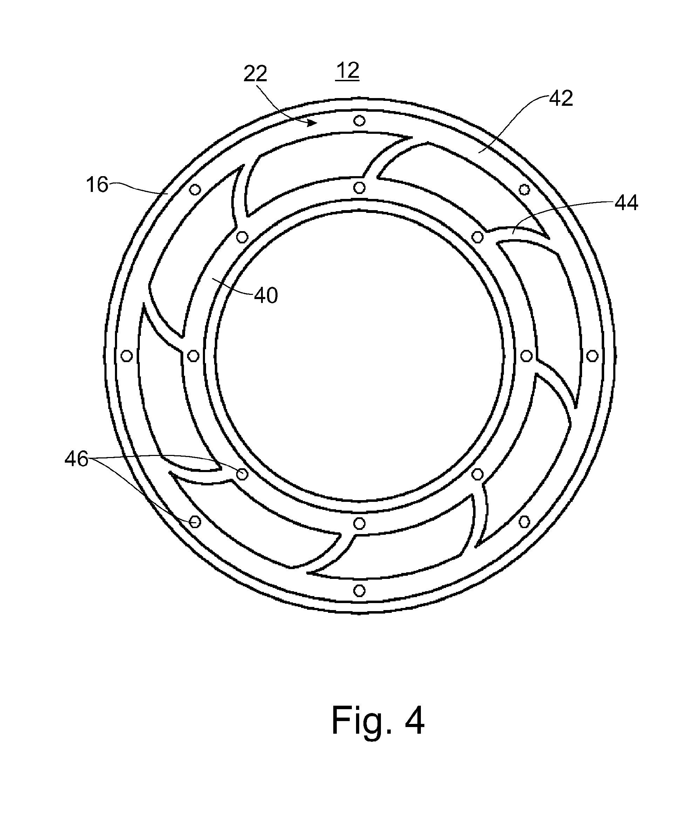

Figur 4 zeigt ein erstes Ausführungsbeispiel des erfindungsgemäßen Reibbelags 12 mit erfindungsgemäßen Trägerelement 22. In dem hier dargestellten Ausführungsbeispiel weist das Trägerelement 22 ein erstes inneres Ringteil 40 und ein zweites äußeres Ringteil 42 auf, die mit stegartigen Verbindungselementen 44 verbunden sind. Ebenfalls zu sehen ist das Reibmaterial 16, in das das Trägerelement 22 eingebettet ist.

In dem in Figur 4 dargestellten Ausführungsbeispiel sind die Ringelteile 40, 42 als geschlossene Ringteile ausgebildet, die regelmäßig über ihren Umfang verteilte Öffnungen 46 für die Aufnahmen der Nieten 26 aufweisen. Wie ebenfalls Figur 4 zu entnehmen ist, sind die stegartigen Verbindungselemente 44 zum einen integral mit dem ersten Ringteil 40 und dem zweiten Ringteil 42 verbunden und zum anderen in etwa tangential ausgerichtet ist. Die tangentiale Ausrichtung der stegartigen Verbindungselemente 44 ist insbesondere vorteilhaft, da sie einen geringeren Widerstand gegen Verformungen darstellt, wodurch eine höhere Maßhaltigkeit unter Temperatur erreicht werden kann.

Aufgrund der integralen Verbindungselemente 44 zwischen dem inneren Ringteil 40 und dem äußeren Ringteil 42 können auch Beläge mit großen Durchmessern abgestützt werden, die deshalb ebenfalls sehr dünn ausführbar sind.

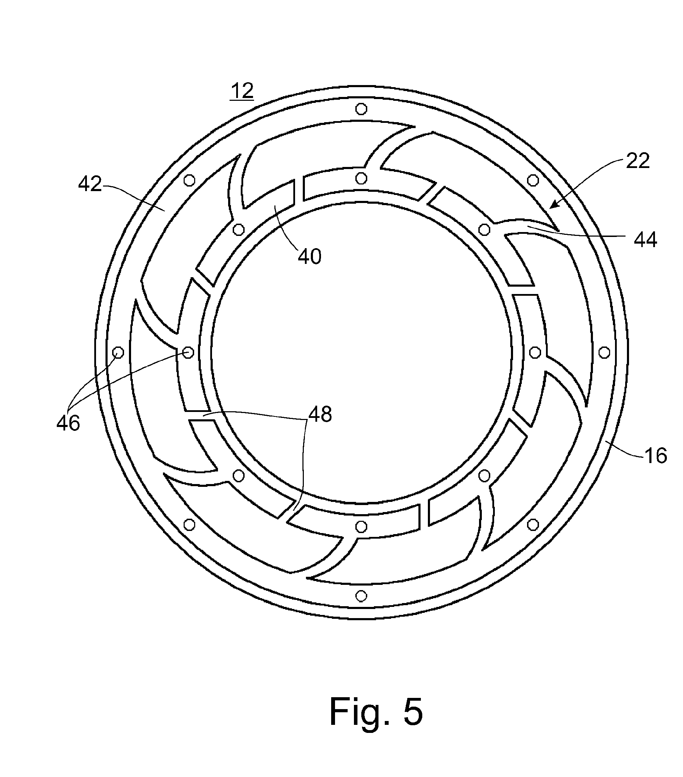

Figur 5 zeigt ein weiteres bevorzugtes Ausführungsbeispiel des erfindungsgemäßen Trägerelements, bei dem zusätzlich zu den in Figur 4 gezeigten Eigenschaften das innere Ringteil 40 Schlitze 48 aufweist, so dass das innere und das äußere Ringteil 42 radial beweglich zueinander ausgebildet sind. Die Schlitze haben zudem den Vorteil, dass sie die unterschiedlichen thermischen Ausdehnungskoeffizienten zwischen Trägerelement 22 und Belagmaterial 16 ausgleichen können, so dass einem Aufschirmen des Reibbelags 12 entgegengewirkt werden kann.

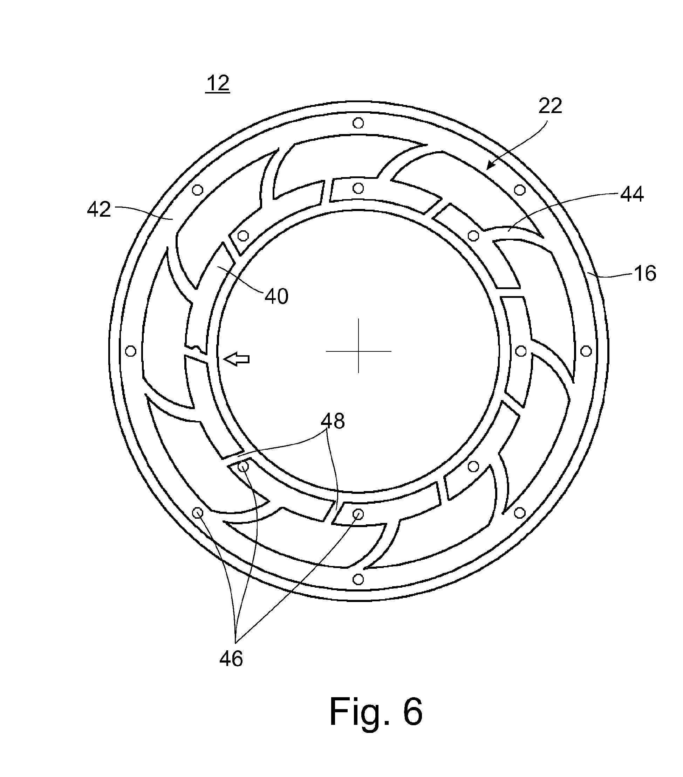

Die Anordnung von Schlitzen 48 an dem Trägerelement 22 kann jedoch das Problem nach sich ziehen, dass die Öffnungen 46, die normalerweise erst nach Einbetten des Trägerelements 22 in das Reibmaterial 16 ausgebildet werden, genau auf die Schlitze 48 treffen. Eine mögliche Lösung dazu ist Schlitze 48 bzw. Öffnungen 46 ungleichmäßig über den Umfang zu verteilen. Eine andere Möglichkeit ist in Figur 6 dargestellt, bei dem die Anzahl der Schlitze 48 und die Anzahl der Öffnungen 46 ungleich ist. Bei dem in Figur 6 dargestellten Ausführungsbeispiel sind am inneren Ringteil 40 acht Öffnungen 46 und neun Schlitze 48 vorgesehen. Sollte tatsächlich eine Öffnung 46 auf einen Schlitz 48 treffen (siehe Pfeil), so kann durch die ungleiche Anzahl von Schlitzen 48 und Öffnungen 46 sichergestellt werden, dass die anderen Öffnungen 46 bzw. Schlitze 48 nicht aufeinandertreffen.

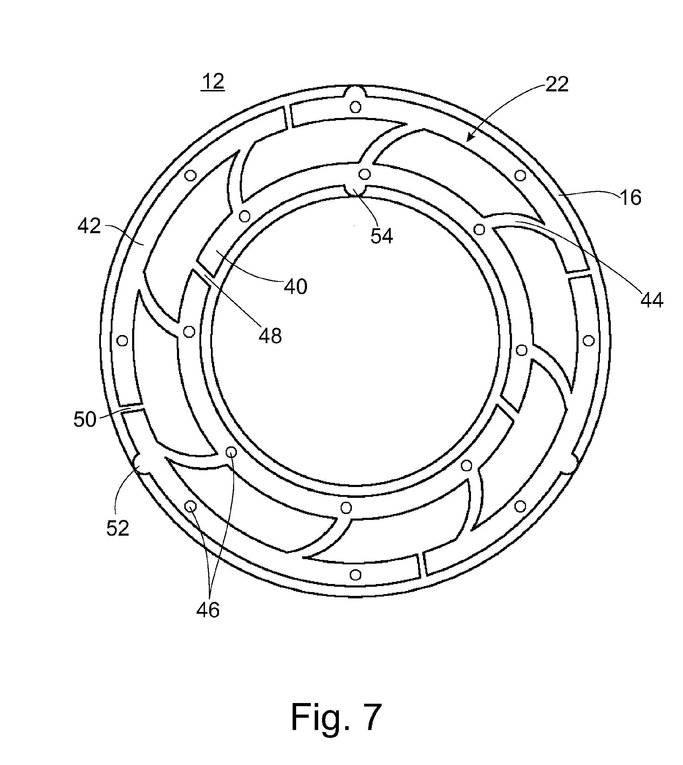

Gemäß einem weiteren schematisch in Figur 7 dargestellten bevorzugten Ausführungsbeispiel kann nicht nur das innere Ringteil 40 einen Schlitz 48 aufweisen, sondern es können auch Schlitze 50 in dem zweiten Ringteil 42 ausgebildet sein. Dabei sind die Schlitze 48, 50 bzw. Verbindungsstege 44 jeweils so angeordnet, dass über den gesamten Umfang des Trägerelements 22 eine Verbindung zwischen den ersten Ringteilen 40 und den zweiten Ringteilen 42 besteht. Des Weiteren zeigt Figur 7, dass das Trägerelement 22 Montagezentrierelemente 52, 54 aufweist, die radial außen am äußeren Ringteil 42 (siehe Montagezentrierelement 52) bzw. radial innen am ersten Ringteil 40 (siehe Montagezentriereinrichtung 54) angeordnet sind. Dadurch wird sichergestellt, dass das Reibmaterial 16 zentriert an dem Trägerelement 22 ausgerichtet werden kann, so dass das Trägerelement 22 in das Reibmaterial 16 eingebettet werden kann. Dadurch wird sichergestellt, dass beim Einbetten des Trägerelementes 22 in das Reibmaterial 16 zum Herstellen einer flächenbündigen Rückseite eine sichere Zentrierung des Trägerelementes 22 erfolgen kann.

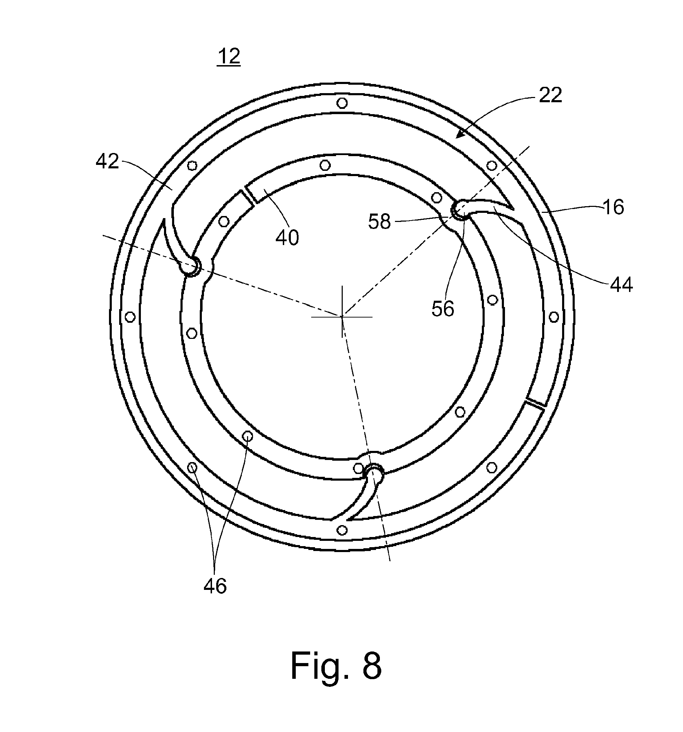

Figur 8 zeigt ein weiteres bevorzugtes Ausführungsbeispiel, bei dem das innere Ringteil 40 und das äußere Ringteil 42 nicht über integral ausgebildete Verbindungsstege 44 verbunden sind. Gemäß dem in Figur 8 dargestellten Ausführungsbeispiel sind die Verbindungsstege 44 integral mit dem zweiten äußeren Ringteil 42 verbunden, bilden jedoch mit dem inneren Ringteil 40 eine lösbare aber drehfeste Verbindung. Die drehfeste Verbindung wird dabei über komplementär ausgeführte Verdickungen 56 am Verbindungssteg 44 und Einbuchtungen 58 am inneren Ringteil 40 ausgebildet. Diese Einbuchtungen 58 und zugehörigen Verdickungen 56 der Verbindungsstege 44 können über den Umfang des Reibbelags 12 gleich verteilt angeordnet sein, es ist jedoch auch möglich, die Einbuchtungen 58 und Verbindungsstege 44 ungleich zu verteilen, so dass eine eineindeutige Lage zwischen erstem Ringteil 40 und zweitem Ringteil 42 geschaffen wird. Gleichzeitig kann eine Ungleichverteilung einem zufälligen Zusammentreffen zwischen Öffnungen 46 und Einbuchtungen 58 entgegenwirken.

Selbst wenn in den hier dargestellten Ausführungsformen jeweils eine zweireihige Vernietung dargestellt ist, so kann auch nur eins der Ringelemente 40; 42 Öffnungen für die Nieten 26 aufweisen. Die zweiringige Ausgestaltung bildet insgesamt eine verbesserte Abstützung im Vergleich zu den aus dem Stand der Technik bekannten Trägerelementen, so dass auch Beläge mit größerem Durchmesser vergleichsweise dünn ausgeführt werden können. Des Weiteren können die Öffnungen 46 im ersten Ringteil 40 und zweitem Ringteil 42 auch ungleich über den Umfang verteilt sein. Die in etwa tangentiale Orientierung der Verbindungselemente 44 und auch die Anordnung bzw. allgemein die Ausbildung der Schlitze 48, 50 führt zu einer geringeren Verformung bzw. höheren Maßhaltigkeit unter Temperatur, da sie einen geringeren Widerstand gegen Verformung darstellen bzw. die unterschiedlichen Ausdehnungskoeffizienten von Reibmaterial und Trägerelementmaterial ausgleichen können. Dadurch wird einem Schirmen im Betrieb und während der Fertigung entgegengewirkt, so dass die Lebensdauer einer Kupplungsscheibe mit einem derartigen Reibbelag erhöht werden kann. Für einige Ausführungen ist es vorteilhaft, wenn die Öffnungen 46 in den Ringteilen 40,42 der Trägerelemente 22,24 unterschiedliche, insbesondere zwei verschiedene Durchmesser aufweisen und die Durchmesser mit den Nietöffnungen 36,38 der Belagfeder 4 im Wesentlichen korrespondierend ausgeführt sind.

**Bezugszeichen**

| | |
|---|---|
| 2 | Nabenscheibe |
| 4 | Belagfeder |
| 6 | Nabe |
| 8 | Niet |
| 10 | Kupplungsscheibe |
| 12, 14 | Reibbelag |
| 16,18 | Reibmaterial |
| 22, 24 | Trägerelement |
| 26 | Befestigungselement; Niet |
| 28 | Belagfederfuß |
| 30 | Belagfederöffnung |
| 32 | erster Belagfederabschnitt |
| 34 | zweiter Belagfederabschnitt |
| 36, 38 | Nietöffnung |
| 40 | erstes Ringteil |
| 42 | zweites Ringteil |
| 44 | Verbindungselement |
| 46 | Öffnung für Befestigungselement |
| 48, 50 | Schlitz |
| 52, 54 | Montagezentrierelement |
| 56 | Verdickung |
| 58 | Einbuchtung |

## Patentansprüche

1. Trägerelement (22; 24) für einen Reibbelag (12; 14), insbesondere für eine Reibungskupplung in einem Kraftfahrzeug, wobei das Trägerelement (22; 24) zumindest einseitig an einem Reibmaterial (16; 18) befestigbar ist, **dadurch gekennzeichnet, dass** das Trägerelement (22; 24) zumindest abschnittsweise ein erstes inneres Ringteil (40) und ein zweites äußeres Ringteil (42) aufweist, die über mindestens ein, vorzugsweise stegartiges, Verbindungselement (44) miteinander verbindbar sind.

2. Trägerelement (22; 24) nach Anspruch 1, wobei das erste und/oder das zweite Ringteil (40; 42) dazu ausgelegt ist, dass in ihm mindestens eine Öffnung (46) ausbildbar ist, durch die ein Befestigungselement, insbesondere ein Niet, führbar ist.

3. Trägerelement (22; 24) nach Anspruch 1 oder 2, wobei das erste und das zweite Ringteil (40; 42), vorzugsweise radial, relativ zueinander beweglich ausgebildet sind.

4. Trägerelement (22; 24) nach einem der vorhergehenden Ansprüche, wobei das erste und/oder das zweite Ringteil (40; 42) als umfänglich geschlossener Ring ausgebildet ist.

5. Trägerelement (22; 24) nach einem der vorhergehenden Ansprüche, wobei das erste und/oder das zweite Ringteil (40; 42) mindestens einen Schlitz (48; 50) aufweisen.

6. Trägerelement (22; 24) nach Anspruch 4 und 5, wobei das erste innere Ringteil (40; 42) als geschlossener Ring ausgebildet ist und das zweite äußere Ringteil (40; 42) mindestens einen Schlitz (48; 50) aufweist.

7. Trägerelement (22; 24) nach Anspruch 2 und 5, oder 2 und 6, wobei der mindestens eine Schlitz (48; 50) derart angeordnet ist, dass die mindestens eine auszubildende Öffnung (46) an einer ungeschlitzten Stelle des ersten und/oder zweiten Ringteils (40; 42) ausbildbar ist, wobei vorzugsweise eine Anzahl der Schlitze (48;50) ungleich einer Anzahl der auszubildenden Öffnungen (46) ist.

8. Trägerelement (22; 24) nach einem der vorhergehenden Ansprüche, wobei das mindestens eine Verbindungselement (44) im Wesentlichen radial ausgerichtet ist.

9. Trägerelement (22; 24) nach einem der vorhergehenden Ansprüche, wobei das mindestens eine Verbindungselement (44) eine im Wesentlichen tangentiale Ausrichtung aufweist.

10. Trägerelement (22; 24) nach einem der vorhergehenden Ansprüche, wobei das mindestens eine Verbindungselement (44) im Wesentlichen gerade ausgebildet ist.

11. Trägerelement (22; 24) nach einem der vorhergehenden Ansprüche, wobei das mindestens eine Verbindungselement (44) im Wesentlichen eine Kurvenform aufweist.

12. Trägerelement (22; 24) nach einem der vorhergehenden Ansprüche, wobei das mindestens Verbindungselement (44) integral mit dem ersten und dem zweiten Ringteil (40; 42) verbunden ist.

13. Trägerelement (22; 24) nach einem der vorhergehenden Ansprüche, wobei das Verbindungselement (44) integral mit dem ersten oder dem zweiten Ringteil (40; 42) verbunden ist und drehfest aber lösbar an dem jeweils anderen Ringteil (40; 42) anordenbar ist.

14. Trägerelement (22; 24) nach Anspruch 13, wobei das nicht integral mit dem mindestens einen Verbindungselement (44) verbundene Ringteil (40; 42) mindestens eine Aussparung aufweist, die derart ausgebildet ist, dass in ihr das mindestens eine Verbindungselement (44) aufnehmbar ist, wobei vorzugsweise das mindestens eine Verbindungselement (44) eine zu der Aussparung komplementäre Form aufweist.

15. Trägerelement (22; 24) nach Anspruch 13 oder 14, wobei das nicht integral mit dem mindestens einen Verbindungselement (44) verbundene Ringteil (40; 42) dazu ausgebildet ist, in eine eineindeutige Lage bezüglich des ersten Ringteils (40; 42) einzunehmen, wobei vorzugsweise mindestens zwei die Verbindungselemente (44) aufnehmende Aussparungen vorgesehen sind, die in zueinander unterschiedlichen Winkel angeordnet sind.

16. Trägerelement (22; 24) nach einem der vorhergehenden Ansprüche, wobei das Trägerelement (22; 24) mindestens ein Montagezentrierelement, insbesondere in Form einer Zentrierlasche, aufweist, das radial innen, vorzugsweise am ersten inneren Ringteil (40; 42), und/oder radial außen, vorzugsweise am zweiten äußeren Ringteil (40; 42), ausgebildet ist.

17. Reibbelag (12; 14), insbesondere für eine Reibungskupplung in einem Kraftfahrzeug, **dadurch gekennzeichnet, dass** ein Reibmaterial (16; 18) des Reibbelags (12; 14) zumindest einseitig an einem Trägerelement (22; 24) nach einem der vorhergehenden Ansprüche befestigt ist.

18. Reibbelag (12; 14) nach Anspruch 17, wobei das Trägerelement (22; 24) in das Reibmaterial (16; 18) derart eingebettet ist, dass Trägerelement (22; 24) und Reibmaterial (16; 18) eine im Wesentlichen eben Fläche bilden und/oder das Trägerelement (22; 24) im Wesentlichen von dem Reibmaterial (16; 18) umschlossen ist.

19. Belagfeder (4), insbesondere für eine Reibungskupplung in einem Kraftfahrzeug **dadurch gekennzeichnet, dass** die Belagfeder (5) dazu ausgebildet ist, einen Reibbelag (12, 14) nach einem der Ansprüche 17 oder 18 zu tragen.

20. Belagfeder nach Anspruch 19, wobei die Belagfeder (4) einen ersten und einen zweiten Abschnitt (32, 34) aufweist, die dazu ausgelegt sind, mit dem ersten bzw. zweiten Ringteil (40, 42) verbunden zu werden, wobei vorzugsweise der erste und der zweite Abschnitt (32, 34) Nietöffnungen (36, 38) aufweisen, wobei die Nietöffnungen (36, 38) vorzugsweise paarweise angeordnet sind.

21. Belagfeder nach Anspruch 20, wobei die Nietöffnungen (36, 38) einen unterschiedlichen Durchmesser aufweisen und vorzugsweise gleich ausgestaltete Nietöffnungen (36, 38) über Kreuz an der Belagfeder (4) angeordnet sind.

22. Reibungskupplung, insbesondere für ein Kraftfahrzeug, mit einer zwischen einem Schwungrad und einer Anpressplatte angeordneten Kupplungsscheibe (10), **dadurch gekennzeichnet, dass** die Kupplungsscheibe (10) einen Reibbelag (12; 14) nach Anspruch 17 oder 18 und/oder eine Belagfeder (4) nach einem der Ansprüche 19 bis 21 aufweist.
